# EUROPÄISCHE PATENTSCHRIFT

(11) **EP 2 845 932 B1**
(45) Veröffentlichungstag und Bekanntmachung des Hinweises auf die Patenterteilung: **19.05.2021**
(21) Anmeldenummer: 14171066.5
(22) Anmeldetag: 04.06.2014
(51) Int. Cl.: D02G 3/28, D02G 3/44

(54) **Polymerschlauch mit einem textilen Festigkeitsträger**
Polymer hose with a textile reinforcement
Tuyau en polymère doté d'un support de fixation textile

(30) Priorität: 10.06.2013 DE 102013105980
(43) Veröffentlichungstag der Anmeldung: 11.03.2015
(73) Patentinhaber: VERITAS AG, 63571 Gelnhausen (DE)
(72) Erfinder: Niesse, Michael, 63571 Gelnhausen (DE); Van Hooren, Marc, 63579 Freigericht (DE)
(74) Vertreter: Patentship Patentanwaltsgesellschaft mbH

(56) Entgegenhaltungen:
- EP-A1- 0 024 512
- WO-A1-2006/102641
- WO-A1-2010/056965
- WO-A2-2006/038229
- GB-A- 526 163
- US-A- 3 056 429
- US-A- 3 060 973
- US-A- 3 071 919
- US-A- 3 395 529
- US-A- 5 425 681

## Beschreibung

Die vorliegende Erfindung betrifft einen Polymerschlauch mit einem eingebetteten textilen Festigkeitsträger.

In der EP 0 024 512 A1 ist ein Schlauch mit einer Vielzahl von Verstärkungsschichten beschrieben, welche zwischen einem Innenschlauch und einem äußeren Schutzmantel des Schlauches angeordnet sind, wobei die Verstärkungsschichten aus Cord-Fasern bestehen.

In der WO 2010/056965 A1 ist ein faserverstärkter thermoplastischer Schlauch mit einem Verstärkungsgewebe beschrieben, wobei das Verstärkungsgewebe aus Schussfäden aus einem thermoplastischen Polymer und aus Kettenfäden besteht.

In der US 3,056,429 ist ein flexibler Schlauch mit einem inneren gewebten Mantel und einem äußeren gewebten Mantel beschrieben, wobei die Mäntel aus Schussfäden und Kettenfäden gebildet sind.

In der US 3,060,973 ist ein verstärkter Schlauch mit einem Schlauchbereich beschrieben, der von einer aus einem Geflecht bestehenden Verstärkungshülle bedeckt ist, wobei die Verstärkungshülle aus Kerngarnen besteht, welche aus einer zentralen Kernfaser bestehen, um die eine Vielzahl von verdrehten Filament-Fasern gewunden sind.

In der US 3,071,919 sind Komposit-Produkte beschrieben, welche eine textile Verstärkung aufweisen, wobei die textile Verstärkung aus einem Garn besteht, welches aus einem Kern aus Filament-Material und einem Mantel besteht.

In der GB 526,163 ist eine Lage eines Reifens beschrieben, in welcher Cord-Fäden parallel angeordnet sind, wobei die Cord-Fäden aus hoch-widerstandfähigen synthetischen Filamenten bestehen.

Es ist die der Erfindung zugrundeliegende Aufgabe, einen Polymerschlauch anzugeben, der hohen Belastungen standhalten kann.

Diese Aufgabe wird durch den Gegenstand mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen Polymerschlauch mit einem eingebetteten textilen Festigkeitsträger gelöst, der aus einem Zwirn aufgebaut ist und der Zwirn mehrere gegenläufig gedrehte Einzelgarne umfasst, deren Faserverlauf in Längsrichtung des Zwirns liegt. Dadurch liegt der Faserverlauf des Zwirns in Längsrichtung des Zwirns. Dadurch wird beispielsweise der technische Vorteil erreicht, dass die Faserrichtung oder die Filamente des Zwirnes einheitlich in der Belastungsrichtung liegen, so dass eine bessere Kraftverteilung innerhalb des Garnes erreicht wird.

Die Drehung der Einzelgarne hinsichtlich eines Drehmoments ist ausbalanciert. Dadurch wird der technische Vorteil erreicht, dass die Kringelneigung für ein fehlerfreies oder störungsfreies Verstricken reduziert wird.

Ferner ist der Zwirn aus zumindest drei Einzelgarnen gezwirnt. Dadurch wird der technische Vorteil erreicht, dass eine hohe Festigkeit des Festigkeitsträgers erreicht wird.

In einer vorteilhaften Ausführungsform des Polymerschlauches nach dem ersten Aspekt weisen die drei Einzelgarne eine S-Drehung auf. Dadurch wird beispielsweise der technische Vorteil erreicht, dass einheitlich gedrehte Einzelgarne verwendet werden können.

In einer weiteren vorteilhaften Ausführungsform des Polymerschlauches nach dem ersten Aspekt weist zumindest eines der Einzelgarne eine Garnfeinheit von 100 dtex bis 2000 dtex, vorzugsweise 500 dtex bis 1500 dtex, auf. Dadurch wird beispielsweise der technische Vorteil erreicht, dass eine gute Verarbeitbarkeit des Zwirns sichergestellt werden kann.

In einer weiteren vorteilhaften Ausführungsform des Polymerschlauches nach dem ersten Aspekt weist zumindest eines der Einzelgarne eine Garndrehzahl von 1-300 Drehungen pro Meter auf. Dadurch wird beispielsweise der technische Vorteil erreicht, dass eine hohe Festigkeit des Zwirns erreicht wird.

Zumindest eines der Einzelgarne umfasst meta-Aramid, para-Aramid, Polyoxadiazol, Polyetheretherketon, Polyphenylenoxid, Polyphenylensulfid, Polybutylenterephthalat, Polyphenylenbenzobisoxazol, Polyamid-Imid, Polytetrafluorethylen oder ein flüssigkristallines Polymer (Liquid Cristal Polymer - LCP). Dadurch wird der technische Vorteil erreicht, dass besonders geeignete Werkstoffe zur Herstellung des Festigkeitsträgers verwendet werden.

In einer weiteren vorteilhaften Ausführungsform des Polymerschlauches nach dem ersten Aspekt umfasst zumindest eines der Einzelgarne eine Glasfaser, Basaltfaser oder Metallfaser. Dadurch wird beispielsweise der technische Vorteil erreicht, dass eine hohe Stabilität des Festigkeitsträgers erzielt wird. Bei der Verwendung einer Metallfaser kann zusätzlich Elektrizität abgeleitet werden.

In einer weiteren vorteilhaften Ausführungsform des Polymerschlauches nach dem ersten Aspekt liegt der Feinheitsbereich des Zwirns im Bereich von 500 bis 8000 dtex. Dadurch wird beispielsweise ebenfalls der technische Vorteil erreicht, dass eine gute Verarbeitbarkeit des Zwirns sichergestellt werden kann.

In einer weiteren vorteilhaften Ausführungsform des Polymerschlauches nach dem ersten Aspekt umfasst der textile Festigkeitsträger ein Breitgewebe, ein Schmalgewebe, ein Gestrick, ein Gewirk, ein Geflecht, ein Gelege, ein Vlies- oder ein Filzgebilde. Dadurch wird beispielsweise der technische Vorteil erreicht, dass zur Einbettung besonders geeignete Formen des Festigkeitsträgers verwendet werden und ein hoher Kraftschluss mit der Polymermatrix erreicht wird.

Ferner weist der textile Festigkeitsträger eine Schlauchform auf. Dadurch wird der technische Vorteil erreicht, dass eine Ausdehnung des Polymerschlauches erschwert wird.

Gemäß einem zweiten Aspekt der Erfindung wird die Aufgabe durch ein Verfahren zum Herstellen eines Polymerschlauches mit dem Schritt eines Einbettens eines textilen Festigkeitsträgers in den Polymerschlauch gelöst. Dadurch wird der technische Vorteil erreicht, dass ein belastungsfähiger Polymerschlauch gebildet wird.

Ausführungsbeispiele der Erfindung sind in den Zeichnungen dargestellt und werden im Folgenden näher beschrieben.

Es zeigen:
Fig. 1 eine schematische Ansicht eines Polymerschlauches mit eingebettetem
Festigkeitsträger;
Fig. 2A eine Ansicht eines Zwirns mit drei Einzelgarnen;
Fig. 2B eine Ansicht eines nicht erfindungsgemäßen Zwirns mit zwei Einzelgarnen;
Fig. 3A eine Ansicht eines nicht erfindungsgemäßen Geflechtfadens;
Fig. 3B eine Ansicht eines nicht erfindungsgemäßen Geflechtfadens;
Fig. 3C eine Ansicht eines nicht erfindungsgemäßen Geflechtfadens; und
Fig. 4 eine Ansicht einer nicht erfindungsgemäßen Hybridgarnkonstruktion.

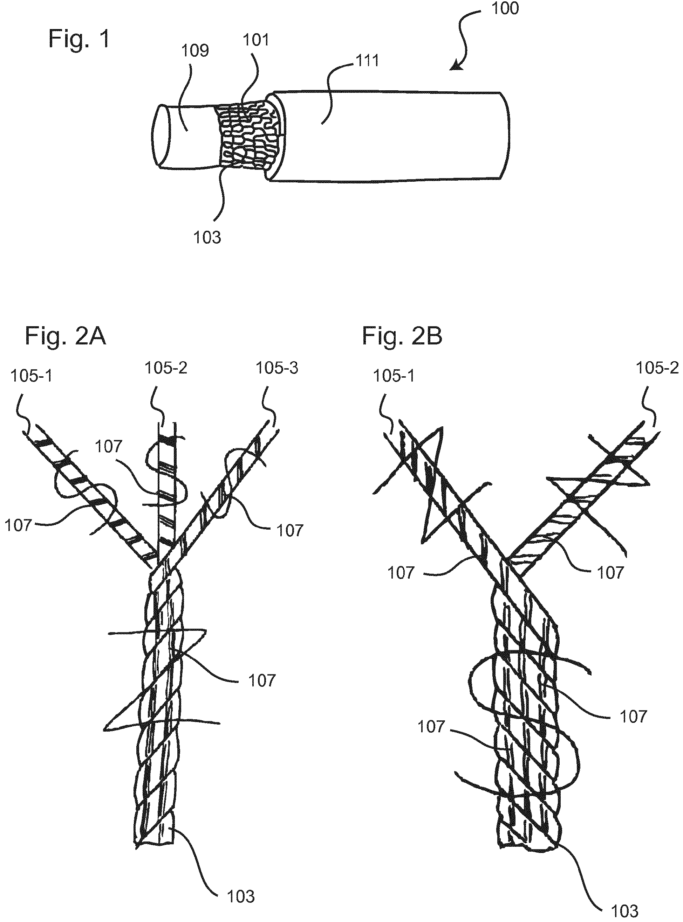

Fig. 1 zeigt eine schematische Ansicht eines Aufbaus eines Polymerschlauches 100 mit einem eingebetteten Festigkeitsträger 101. Der textile Festigkeitsträger 101 ist zwischen einer Innenschicht 109 aus polymerem Werkstoff und einer Außenschicht 111 aus polymerem Werkstoff eingebettet. Der Polymerschlauch 100 ist beispielsweise ein Ladeluftschlauch in einem Kraftfahrzeug.

Der Festigkeitsträger 101 ist in Schlauchform aus einem textilen Werkstoff gebildet. Dieser textile Werkstoff verbessert die Eigenschaften des Festigkeitsträgers 101 und somit die Leistungsfähigkeit des gesamten Polymerschlauches 100. Der textile Festigkeitsträger 101 ist ein textiles Flächengebilde, das ist aus einem Zwirn hergestellt ist. Der Festigkeitsträger 101 ist beispielsweise ein Breitgewebe, ein Schmalgewebe, ein Gestrick mit oder ohne Schusseintrag, ein Gewirk wie ein Raschelgewirk, Kettengewirk oder Schusseintragsgewirk, ein Geflecht wie beispielsweise ein Flach- oder Rundgeflecht, ein Gelege in paralleler und/oder spiralisierter Form oder ein Vlies oder Filzgebilde.

Der Festigkeitsträger 101 wird beispielsweise mittels Stricken, Wirken, Legen oder Flechten eines Zwirns in ein- oder mehrlagiger Form gewonnen. Der Festigkeitsträger 101 kann beispielsweise auf Basis eines Polyoxadiazols (POD), einer Glasfaserzwirnkonstruktion oder einer meta-Aramid-Zwirnkonstruktion als Multifilament- oder Stapelfasergarn aufgebaut sein.

Die Innenschicht 109 und die Außenschicht 111 ist beispielsweise aus Acrylnitril-Butadienkautschuk, Polybutadien, Chloroprenkautschuk, chloriertem Polyethylen, chlorsulfoniertem Polyethylen, Copolymeren aus Ethylenoxid oder Epichlorhydrin, hydriertem Acrylnitril-Butadienkautschuk, Ethylen-Vinylactetatkautschuk, Ethylenacrylatkautschuk, Acrylkautschuk, Silikonkautschuk, Fluorsilikonkautschuk oder Fluorkautschuk.

Fig. 2A zeigt eine Ansicht eines erfindungsgemäßen Zwirns 103 mit drei Einzelgarnen 105-1, 105-2 und 105-3, der zur Herstellung des Festigkeitsträgers 101 verwendet werden kann. Die drei Einzelgarne 105-1, 105-2 und 105-3 sind derart gegenläufig gedreht, dass deren Fasern 107 in Längsrichtung des Zwirns 103 liegen. Die Einzelgarne 105-1, 105-2 und 105-3 weisen eine S-Drehung auf und sind zu einem Zwirn 103 mit Z-Drehung verzwirnt. Dadurch entsteht eine drehmomentausgeglichene (Torque-Balanced) Konstruktion in S-Z-Drehung.

Ist die Richtung der Drehungsspirale gleich wie der Schrägstrich des Buchstabens "Z" handelt es sich um eine Z-Drehung. Bei Drehungsspiralen, die der Richtung des Mittelteils des Buchstabens "S" folgen, handelt es sich um eine S-Drehung.

Fig. 2B zeigt eine Ansicht eines nicht erfindungsgemäßen Zwirns 103 mit zwei Einzelgarnen 105-1 und 105-2. Die zwei Einzelgarne 105-1 und 105-2 sind derart gegenläufig gedreht, dass deren Fasern 107 in Längsrichtung des Zwirns 103 liegen. Die Einzelgarne 105-1 und 105-2 weisen eine Z-Drehung auf und sind zu einem Zwirn 103 mit S-Drehung verzwirnt. Dadurch entsteht eine drehmomentausgeglichene (Torque-Balanced) Konstruktion in Z-S-Drehung.

Der mehrstufige Zwirn 103 wird gegenläufig oder ausbalanciert gedreht, so dass die Faserrichtung in der Zwirnstruktur in der Belastungsrichtung liegt. Dem mit zunehmender Drehung der Einzelgarne 105-1, 105-2 und 105-3 steigenden und sich der Zwirndrehung widersetzenden Garntorsionsmoment wird so gezielt entgegengewirkt. Der Zwirn 103 kann einfach und oder mehrfach gezwirnt sein.

Die Drehzahl der Einzelgarne 105-1, 105-2 und 105-3 und die Drehungserteilung in S-Richtung oder Z-Richtung und eine definierte unterschiedliche Drehzahldifferenz zwischen den Einzelgarnen 105-1, 105-2 und 105-3 bestimmen eine ausgeglichene Konstruktion im Faserverband. Durch die Drehzahl der Einzelgarne 105-1, 105-2 und 105-3 kann die Garnvoluminosität der Konstruktion eingestellt werden.

Der Zwirn 103 weist eine ausbalancierte Zwirnkonstruktion auf, die durch optimierte Einstellung und Drehung der Einzelgarne 105-1, 105-2 und 105-3 erzeugt wird. Über eine bestimmte Drehungsdichte und die Drehungsrichtung der Einzelgarne 105-1, 105-2 und 105-3 können die Eigenschaften des zu verarbeitenden Zwirnes gezielt eingestellt werden. Daneben wird die Festigkeit des Zwirns 103 und dem daraus hergestellten textilen Festigkeitsträger 101 durch das verwendete Grundmaterial bestimmt.

Die Einzelgarne 105-1, 105-2, 105-3 können eine Garnfeinheit von 10 dtex bis 2000 dtex, vorzugsweise 500 dtex bis 1500 dtex, aufweisen. Die Bezeichnung der Garnfeinheit bei technischen Garnen erfolgt in Gewichtsnummerierungen, wobei "tex" das Garngewicht in g je 1000 Meter Garnlänge oder "dtex" das Garngewicht in g je 10.000 Meter Garnlänge angibt. Die Einzelgarne 105-1, 105-2, 105-3 können eine Garndrehzahl von 1-300 Drehungen pro Meter aufweisen, d.h. eine Garndrehzahl von Z 1-300 oder S 1-300. Die Garndrehzahl in "Z" d.h. rechts gedreht, oder in "S", d.h. links gedreht, bestimmt die Drehungsdichte und Voluminösität des Garns. Der Feinheitsbereich des Zwirns 103 liegt im Bereich von 500 dtex bis 8000 dtex.

Durch den Zwirn 103 entsteht eine verstrickbare Zwirnvariante, die einen verbesserten Kraftschluss aufweist. Zudem kann durch den Zwirn 103 eine Kringelneigung verhindert werden, so dass ein störungsfreies Verstricken ermöglicht wird. Durch die optimierte Garnkonstruktion in Form eines verstrickbaren Torque-Balanced-Zwirnes 103, wird eine spezifische Garnaufmachung des Festigkeitsträgers 101 erhalten.

Durch den Zwirn 103 wird eine Erhöhung der Garnverfestigung durch erhöhten Kraft- oder Reibschluss zwischen den einzelnen Filamenten erreicht. Eine Schlingenfestigkeit für bessere Verstrickbarkeit wird erhöht. Es entsteht eine Erhöhung der Verschleißfestigkeit und Lebensdauer durch die bessere Kraftverteilung innerhalb des Garns, die durch die einheitliche Ausrichtung der Fasern oder Filamente ermöglicht wird. Zudem wird ein verbesserter Schutz der Einzelfilamente erzielt, da diese weniger aus dem Garnverbund herausragen. Eine Faserflugentwicklung oder Staubentwicklung wird verringert, so dass längere Wartungsintervalle und längere Linienlaufzeiten ermöglicht werden.

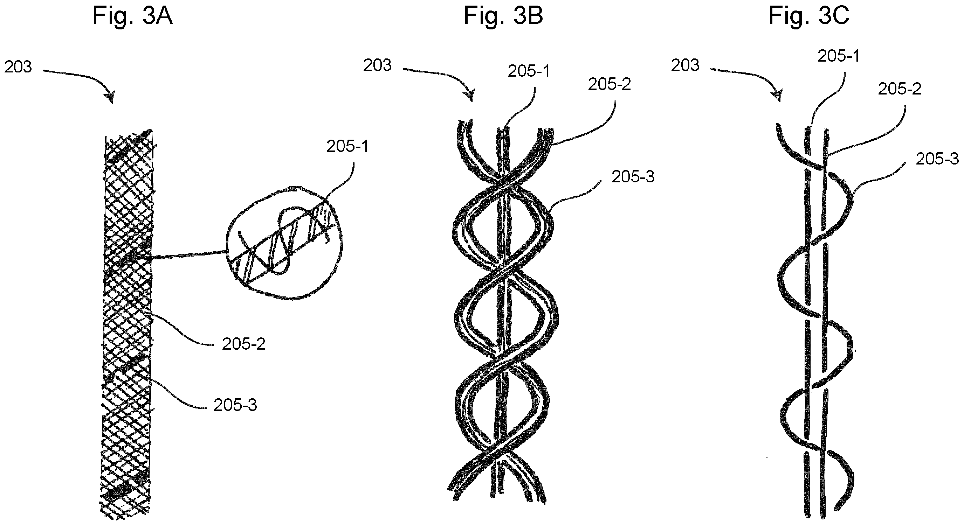

Fig. 3A zeigt eine Ansicht eines nicht erfindungsgemäßen Geflechtfadens 203. Der Geflechtfaden 203 ist aus zumindest drei Einzelfäden 205-1, 205-2 und 205-3 geflochten. Der Geflechtfaden ist ein verstrickbarer Multifilament-Geflechtfaden, beispielsweise aus Polyoxadiazol, para-Aramid, meta-Aramid oder einer Glasfaser.

Der Geflechtfaden 203 ist aus mindestens drei oder mehreren Einzelfäden 205-1, 205-2 und 205-3 mit oder ohne Drehung gebildet. Die Einzelfäden 205-1, 205-2, 205-3 weisen beispielsweise eine Einzelfadenfeinheit von 10 dtex - 2000 dtex auf.

Die Anzahl der Einzelfäden 205-1, 205-2, 205-3 aus denen der Geflechtfaden 203 geflochten ist, liegt beispielsweise in einem Bereich von 3 bis 50 Einzelfäden. Bei einer geradzahligen Anzahl von Einzelfäden 205-1, 205-2 und 205-3 kann dieser ein Rundgeflecht bilden. Bei einer ungeradzahligen Anzahl von 205-1, 205-2 und 205-3 kann dieser ein Flachgeflecht oder eine Litze bilden. Der Feinheitsbereich des so entstehenden Geflechtfadens 203 liegt beispielsweise im Bereich von 500 dtex bis 8000 dtex.

Die Anzahl der Einzelfäden 205-1, 205-2 und 205-3 und die Feinheit der Einzelfäden 205-1, 205-2 und 205-3 bestimmt die Gesamtstärke und die Eigenschaften des Geflechtfadens 203. Durch den Geflechtfaden 203 wird eine erhöhte Zug- und Schlingenfestigkeit im Vergleich zu herkömmlichen Garnkonstruktionen erreicht. Zudem wird durch den Geflechtfaden 203 eine Höchstzugkraftdehnung verbessert.

Fig. 3B zeigt eine Ansicht eines weiteren nicht erfindungsgemäßen Geflechtfadens 203. Das Einzelgarn 205-1 bildet eine Seele, die von den Einzelfäden 205-2 und 205-3 umflochten wird. Die Seele ist beispielsweise aus einem Glasfasergarn gebildet. Die umflechtenden Einzelfäden 205-2 und 205-3 sind beispielsweise aus Aramidgarnen gebildet, die die Seele vor Beschädigungen schützen.

Fig. 3C zeigt eine Ansicht eines weiteren Geflechtfadens 203. Die zwei Einzelgarne 205-1 und 205-2 werden durch das Einzelgarn 205-3 quasi eingeflochten und fixiert. Die beiden Einzelgarne 205-1 und 205-2 sind beispielsweise aus Glasfasergarn gebildet. Das Einzelgarn 205-3 ist aus einem Aramidgarn gebildet. Möglich ist auch eine Variante, bei der die beiden Einzelgarne 205-1 und 205-2 aus einem Aramidgarn bestehen und das fixierende Einzelgarn 205-3 aus einem Glasfasergarn gebildet wird, so dass durch das gestreckte Aramidgarn eine Erhöhung der Zugfestigkeit erreicht wird.

Durch den Geflechtfaden wird eine Erhöhung der Verschleißfestigkeit und Lebensdauer erreicht. Zudem entsteht eine Erhöhung der Schlingenfestigkeit für bessere Verstrickbarkeit erzielt. Eine Kringelneigung für fehlerfreies und störungsfreies Verstricken wird verringert.

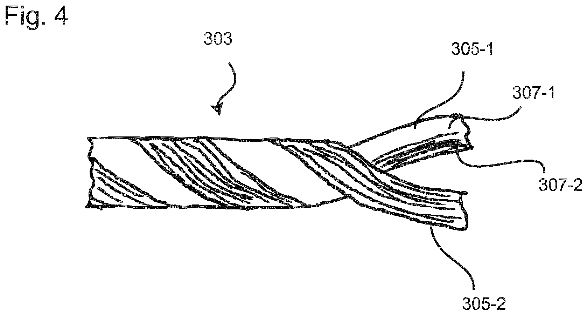

Fig. 4 zeigt eine Ansicht einer nicht erfindungsgemäßen Hybridgarnkonstruktion eines Hybridzwirns 303. In dieser Hybridgarnkonstruktion werden verschiedene Werkstoffe miteinander kombiniert, wie beispielsweise Polyoxadiazol, para-Aramid, meta-Aramid oder eine Glasfaser.

Der Hybridzwirn 303 kann ebenfalls zur Herstellung des Festigkeitsträgers 101 verwendet werden. Der Hybridzwirn 301 umfasst ein erstes Einzelgarn 305-1 und ein zweites Einzelgarn 305-2. Das erste Einzelgarn 305-1 umfasst eine erste Garnkomponente 307-1 und eine zweite Garnkomponente 307-2. In gleicher Weise kann das zweite Einzelgarn 305-2 eine dritte Garnkomponente und eine vierte Garnkomponente umfassen. Die Einzelgarne 305-1 und 305-2 oder die Garnkomponenten 307-1 und 307-2 sind aus verschiedenen Werkstoffen gebildet. Die Fadenform der unterschiedlichen Werkstoffe des Festigkeitsträgers 101 kann als Monofil, Filamentgarn, Stapelfasergarn oder Stretchbrokengarn vorliegen.

Die erste Garnkomponente 307-1 und die zweite Garnkomponente 307-2 weisen beispielsweise eine Garnfeinheit von 10 dtex bis 2000 dtex auf. Der Feinheitsbereich der Einzelgarne 305-1 und 305-2 liegt beispielsweise im Bereich von 500 dtex bis 8000 dtex. Die erste Garnkomponente 307-1 oder die zweite Garnkomponente 307-2 können aus einer Glasfaser, Basaltfaser oder Metallfaser gebildet sein.

Die Besonderheit der Hybridkonstruktionen liegt neben der Verwendung verschiedener Werkstoffkombinationen auch insbesondere darin, dass auch Kombinationen mit den Konstruktionsvarianten aus den oben beschriebenen Zwirnkonstruktionen oder den oben beschriebenen Geflechtfadenkonstruktionen realisierbar sind, so dass sich weitere Multihybridkonstruktionen ergeben. In der Hybridkonstruktion sind somit Mehrfach-Materialkombinationen bei unterschiedlicher Werkstoffauswahl möglich. Dadurch ergeben sich neuartige Kombinationsmöglichkeiten oder Multihybridkonstruktionen, bei denen die Einzelgarne aus den oben beschriebenen Zwirnen oder Geflechtfäden bestehen können.

Die Einzelgarne, Einzelfäden oder Garnkomponenten sowie die textilen Materialkombinationen des Festigkeitsträgers 101 können in allen genannten Varianten auf Basis eines meta-Aramids, eines para-Aramids, einer Glasfaser, eines Polyoxadiazols (POD), eines Polyvinylalkohols (PVA), eines Polyetheretherketons (PEEK), eines Polyphenylenoxids (PPO), eines Polyphenylensulfids (PPS), eines Polybutylenterephthalats (PBT),eines Polyphenylenbenzobioxazoles (PBO), eines Polyamid-Imids (PAI), eines Polytetrafluorethylens (PTFE) oder eines flüssigkristallinen Polymers (Liquid Cristal Polymer - LCP) gebildet sein.

Besonders vorteilhaft ist der Einsatz von Polyoxadiazol (POD), da dieses aufgrund der deutlich hohen Schlingenfestigkeit und Temperaturbeständigkeit hohen Torsionskräften bei einem Maschenbildungsvorgang standhält. Des Weiteren zeichnet sich ein Garn aus Polyoxadiazol durch eine gute Verarbeitbarkeit aus Haftungseigenschaften an Polymermatrices, wie beispielsweise Silikonkautschuk (VMQ-Mischungen), aus.

Durch den Festigkeitsträger, insbesondere auf der Basis von Polyoxadiazol, wird eine hohe Temperaturbeständigkeit, eine hohe Zugfestigkeit und Schlingenfestigkeit erreicht. Dies führt zu einer höheren Lebensdauer des Polymerschlauches. Daneben ergeben sich gute Verarbeitungseigenschaften (Verstrickbarkeit) auch im höheren dtex-Bereich. Zudem kann eine geringe Faserflugentwicklung sichergestellt werden.

Zudem kann ein höherer Kraftschluss oder Reibschluss zwischen den einzelnen Filamenten ermöglicht werden, so dass sich eine Garnverfestigung erhöht. Durch einen Abbau des inneren Drehmomentes wird eine Kringelneigung reduziert. Durch gegenläufiges Verdrehen der zu verzwirnenden Garne erfolgt eine optimierte Belastung in Faserrichtung, während eine ausreichende Elastizität des Zwirnes ermöglicht wird.

Daneben wird eine Zwirnoberfläche mit optimierter Struktur zur Verbesserung der Haftung oder Lagenbindung ermöglicht. Insgesamt ergibt sich eine bessere Kraftverteilung innerhalb des Garnes und eine Erhöhung der Verschleißfestigkeit und Lebensdauer. Zudem wird eine höhere Strukturdehnung des Garnes beim Einsatz des Festigkeitsträgers zur Verstärkung von Ladeluftschläuchen erreicht.

Einzelfilamente sind besser geschützt, da diese weniger aus dem Garnverband herausragen. Dadurch ergibt sich ein geringerer Faserverlust und eine geringere Faserflugentwicklung oder Staubentwicklung. Bei einem Strickprozess sind dadurch längere Linien-Laufzeiten und längere Wartungsintervalle möglich, da der Strickkopf nicht so schnell verschmutzt. Die Schlingenfestigkeit wird für eine bessere Verstrickbarkeit erhöht.

Durch den Polymerschlauch 100 mit dem beschriebenen Festigkeitsträger 101 kann ein Ladeluftschlauch für ein Kraftfahrzeug realisiert werden, der hohen Temperaturen von bis zu 250°C, Drücken von über 3,0 Bar sowie hohen dynamischen Belastungen standhält. Zudem kann gleichzeitig eine hohe Lebensdauer sichergestellt werden.
- 100: Polymerschlauch
- 101: textiler Festigkeitsträger
- 103: Zwirn
- 105-1: Einzelgarn
- 105-2: Einzelgarn
- 105-3: Einzelgarn
- 107: Faserverlauf
- 109: Innenschicht
- 111: Außenschicht

- 203: Geflechtfaden
- 205-1: Einzelfaden
- 205-2: Einzelfaden
- 205-3: Einzelfaden

- 303: Hybridzwirn
- 305-1: Einzelgarn
- 305-2: Einzelgarn
- 307-1: Garnkomponente
- 307-2: Garnkomponente

## Patentansprüche

1. Polymerschlauch (100) mit einem eingebetteten textilen Festigkeitsträger (101),
wobei der textile Festigkeitsträger (101) eine Schlauchform aufweist, und wobei der Festigkeitsträger aus einem Zwirn (103) aufgebaut ist und der Zwirn (103) mehrere gegenläufig gedrehte Einzelgarne (105-1, 105-2, 105-3) umfasst, **dadurch gekennzeichnet, dass** der Faserverlauf (107) der Einzelgarne in Längsrichtung des Zwirns (103) liegt, dass die Drehung der Einzelgarne (105-1, 105-2, 105-3) hinsichtlich eines Drehmoments ausbalanciert ist, dass
zumindest eines der Einzelgarne (105-1, 105-2, 105-3) meta-Aramid, para-Aramid, Polyoxadiazol, Polyvinylalkohol, Polyetheretherketon, Polyphenylenoxid, Polyphenylensulfid, Polybutylenterephthalat, Polyphenylenbenzobisoxazol, Polyamid-Imid, Polytetrafluorethylen oder ein flüssigkristallines Polymer (Liquid Cristal Polymer) umfasst,
und dass der Zwirn (103) aus zumindest drei Einzelgarnen (105-1, 105-2, 105-3) gezwirnt ist.

2. Polymerschlauch (100) nach Anspruch 1, wobei die drei Einzelgarne (105-1, 105-2, 105-3) eine S-Drehung aufweisen.

3. Polymerschlauch (100) nach einem der vorangehenden Ansprüche, wobei zumindest eines der Einzelgarne (105-1, 105-2, 105-3) eine Garnfeinheit von 100 dtex bis 2000 dtex, vorzugsweise 500 dtex bis 1500 dtex, aufweist.

4. Polymerschlauch (100) nach einem der vorangehenden Ansprüche, wobei zumindest eines der Einzelgarne (105-1, 105-2, 105-3) eine Garndrehzahl von 1-300 Drehungen pro Meter aufweist.

5. Polymerschlauch (100) nach einem der vorangehenden Ansprüche, wobei zumindest eines der Einzelgarne (105-1, 105-2, 105-3) eine Glasfaser, Basaltfaser oder Metallfaser umfasst.

6. Polymerschlauch (100) nach einem der vorangehenden Ansprüche, wobei der Feinheitsbereich des Zwirns (103) im Bereich von 500 dtex bis 8000 dtex liegt.

7. Polymerschlauch (100) nach einem der vorangehenden Ansprüche, wobei der textile Festigkeitsträger (101) ein Breitgewebe, ein Schmalgewebe, ein Gestrick, ein Gewirk, ein Geflecht, ein Gelege, ein Vlies- oder ein Filzgebilde umfasst.

8. Verfahren zum Herstellen eines Polymerschlauches (100) mit dem Schritt eines Einbettens eines textilen Festigkeitsträgers (101) nach Anspruch 1 in den Polymerschlauch (100).

## Claims

1. Polymer hose (100) with an embedded textile reinforcement (101), wherein the textile reinforcement (101) has a tubular shape, and wherein the reinforcement is built up from a yarn (103) and the yarn (103) comprises several individual yarns (105-1, 105-2, 105-3) twisted in opposite directions, **characterized by** that
the fiber course (107) of the individuals yarns (105-1, 105-2, 105-3) extends in the longitudinal direction of the yarn (103), so that the rotation of the individual yarns (105-1, 105-2, 105-3) is balanced with respect to a torque,
that at least one of the individual yarns (105-1, 105-2, 105-3) comprises meta-aramid, para-aramid, polyoxadiazole, polyvinyl alcohol, polyetheretherketone, polyphenylene oxide, polyphenylene sulfide, polybutylene terephthalate, polyphenylene benzobisoxazole, polyamide imide, polytetrafluoroethylene or a liquid crystalline polymer (liquid crystal polymer),
and that the yarn (103) is twisted from at least three individual yarns (105-1, 105-2, 105-3).

2. Polymer hose (100) according to claim 1, wherein the three individual yarns (105-1, 105-2, 105-3) comprise an S-twist.

3. Polymer hose (100) according to one of the preceding claims, wherein at least one of the individual yarns (105-1, 105-2, 105-3) has a yarn fineness of 100 dtex to 2000 dtex, preferably 500 dtex to 1500 dtex.

4. Polymer hose (100) according to one of the preceding claims, wherein at least one of the individual yarns (105-1, 105-2, 105-3) has a yarn rotation number of 1-300 rotations per meter.

5. Polymer hose (100) according to one of the preceding claims, wherein at least one of the individual yarns (105-1, 105-2, 105-3) comprises a glass fiber, basalt fiber or metal fiber.

6. Polymer hose (100) according to one of the preceding claims, wherein the fineness range of the yarn (103) is in the range from 500 dtex to 8000 dtex.

7. Polymer hose (100) according to one of the preceding claims, wherein the textile reinforcement (101) comprises a broad fabric, a narrow fabric, a knitted fabric, a warp-knitted fabric, a mesh, a scrim, a fleece or a felt fabric.

8. Method for producing a polymer hose (100) comprising the step of embedding a textile reinforcement (101) according to claim 1 in the polymer hose (100).

## Revendications

1. Tuyau polymère (100) muni d'un support de résistance textile incorporé (101), le support de résistance textile (101) présentant une forme de tuyau, et le support de résistance étant construit à partir d'un retors (103) et le retors (103) comprenant plusieurs fils individuels (105-1, 105-2, 105-3) torsadés en sens contraire, **caractérisé en ce que** l'extension de fibres (107) des fils individuels se situe dans la direction longitudinale du retors (103), **en ce que** la torsion des fils individuels (105-1, 105-2, 105-3) est contrebalancée au regard d'un moment de rotation, **en ce qu'**au moins un des fils individuels (105-1, 105-2, 105-3) comprend du méta-aramide, du para-aramide, du polyoxadiazole, de l'alcool polyvinylique, de la polyétheréthercétone, du polyoxyde de phénylène, du polysulfure de phénylène, du polybutylène téréphtalate, du polyphénylène-benzobisoxazole, du polyamide-imide, du polytétrafluoroéthylène ou un polymère cristallin liquide (Liquid Cristal Polymer), et **en ce que** le retors (103) est retordu à partir d'au moins trois fils individuels (105-1, 105-2, 105-3).

2. Tuyau polymère (100) selon la revendication 1, dans lequel les trois fils individuels (105-1, 105-2, 105-3) présentent une torsion S.

3. Tuyau polymère (100) selon l'une quelconque des revendications précédentes, dans lequel au moins un des fils individuels (105-1, 105-2, 105-3) présente un titre de fil de 100 dtex à 2 000 dtex, de préférence de 500 dtex à 1 500 dtex.

4. Tuyau polymère (100) selon l'une quelconque des revendications précédentes, dans lequel au moins un des fils individuels (105-1, 105-2, 105-3) présente un nombre de torsions de fil de 1 à 300 torsions par mètre.

5. Tuyau polymère (100) selon l'une quelconque des revendications précédentes, dans lequel au moins un des fils individuels (105-1, 105-2, 105-3) comprend une fibre de verre, une fibre de basalte ou une fibre de métal.

6. Tuyau polymère (100) selon l'une quelconque des revendications précédentes, dans lequel la plage de titre du retors (103) se situe dans la plage allant de 500 dtex à 8 000 dtex.

7. Tuyau polymère (100) selon l'une quelconque des revendications précédentes, dans lequel le support de résistance textile (101) comprend un tissu large, un tissu étroit, un tricot, un tulle, un treillis, une nappe, une structure non tissée ou une structure feutrée.

8. Procédé de fabrication d'un tuyau polymère (100) comprenant l'étape d'une incorporation d'un support de résistance textile (101) selon la revendication 1 dans le tuyau polymère (100).
